# EUROPEAN PATENT APPLICATION

(11) **EP 4 773 025 A1**
(43) Date of publication of application: **08.07.2026**
(21) Application number: 25215376.2
(22) Date of filing: 12.11.2025
(51) Int. Cl.: G06F 17/40, G06F 11/07

(54) **INFORMATION PROCESSING APPARATUS, METHOD AND STORAGE MEDIUM FOR LOGGING STARTUP, RESTART AND PROCESS DATA**

(30) Priority: 06.01.2025 JP 2025000055
(71) Applicant: Toshiba TEC Kabushiki Kaisha, Tokyo 141-8562 (JP)
(72) Inventor: Chen, Pengfei, Tokyo, 141-8562 (JP)
(74) Representative: Bandpay & Greuter

(57) **Abstract**

An information processing device includes first and second non-volatile memories, a volatile memory, and a controller configured to perform the steps of: when the information processing device is started, storing, in the first non-volatile memory, startup log data of the information processing device up to a first predetermined size, when the information processing device is restarted, storing, in the first non-volatile memory, restart log data of the information processing device up to a second predetermined size greater than the first predetermined size, cyclically storing process log data of the information processing device in the volatile memory up to a third predetermined size in an overwriting manner, the process log data chronologically following the startup log data or the restart log data; and when the information processing device is terminated, moving the process log data to the second non-volatile memory.

## Description

### FIELD

Embodiments described herein relate generally to an information processing device, a method, and a storage medium.

### BACKGROUND

There is a known storage system that accumulates and stores operation history (or log data) of its own operation. In such a storage system, log management is performed using a function of an operating system, which is called "journald".

In such log management, old log data is deleted and replaced with new log data. Therefore, when the capacity of a storage device is limited, important log data necessary for debugging at the time of abnormal termination may be deleted.

### SUMMARY OF THE INVENTION

Embodiments of this disclosure provide an information processing device, a method, and a storage medium that make it possible to reliably store information necessary to determine the cause of abnormal termination of the information processing device even with a limited storage area.

According to an aspect of the present disclosure, an information processing device comprises a first non-volatile memory; a second non-volatile memory; a volatile memory; and a controller that stores a program and includes a processor configured to execute the program to perform the steps of: when the information processing device is started, storing, in the first non-volatile memory, startup log data of the information processing device up to a first predetermined size, when the information processing device is restarted, storing, in the first non-volatile memory, restart log data of the information processing device up to a second predetermined size greater than the first predetermined size, cyclically storing process log data of the information processing device in the volatile memory up to a third predetermined size in an overwriting manner, the process log data chronologically following the startup log data or the restart log data, and when the information processing device is terminated, moving the process log data to the second non-volatile memory.

According to an aspect of the present invention, the method according may further comprise:
determining whether a size of the startup log data has reached the first predetermined size; and
when the size of the startup log data has reached the first predetermined size, starting to store the process log data.

According to an aspect of the present invention, the method according may further comprise:
starting a resident process, wherein
the process log data is log data of the resident process; and
the process log data is cyclically stored in the overwriting manner until the resident process is terminated.

According to an aspect of the method according to the present invention, the process log data may be moved to the second non-volatile memory when the resident process is terminated in the method.

According to an aspect of the method according to the present invention, the first predetermined size and the third predetermined size may be equal to each other.

According to an aspect of the method according to the present invention,
each of the first predetermined size and the second predetermined size may be determined according to a capacity of the first non-volatile memory.

According to an aspect of the method according to the present invention, the third predetermined size may be determined according to a capacity of the volatile memory.

### BRIEF DESCRIPTION OF THE DRAWINGS

FIG. 1 is a hardware block diagram illustrating an example of a hardware configuration of a target device controller according to an embodiment.
FIG. 2 is a diagram illustrating an example of a storage structure of log data stored by the target device controller.
FIG. 3 is a functional block diagram illustrating an example of a functional configuration of the target device controller.
FIG. 4 is a flowchart illustrating an example of a process performed by the target device controller.

### DETAILED DESCRIPTION

### (Hardware Configuration of Target Device Controller)

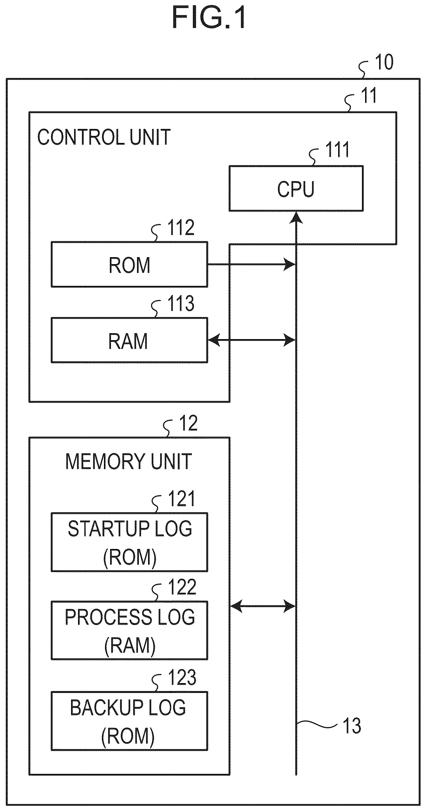

A target device controller 10 according to an embodiment will be described with reference to FIG. 1. FIG. 1 is a hardware block diagram illustrating an example of a hardware configuration of the target device controller 10 according to an embodiment.

The target device controller 10 is implemented by, for example, a microcomputer or an application specific integrated circuit (ASIC) and is incorporated in a target device, such as a printer or a point-of-sale (POS) terminal, to control the operation of the target device. The target device controller 10 operates on an operating system (OS) such as Linux (registered trademark). The target device controller 10 is an example of an information processing device in the present disclosure.

The target device controller10 includes a control unit 11, a memory unit 12, an interface circuit (not shown), a storage device (not shown), and a communication controller (not shown) that are connected to each other via an internal bus 13.

The control unit 11 controls the entire operation of the target device controller 10. The control unit 11 includes a central processing unit (CPU) 111, a read-only memory (ROM) 112, and a random access memory (RAM) 113. The CPU 111 is connected to the ROM 112 and the RAM 113 via an internal bus, such as an address bus or a data bus. The CPU 111 loads programs stored in the ROM 112 into the RAM 113. The CPU 111 operates according to various programs loaded into the RAM 113 and thereby controls the operation of the target device including the target device controller 10. The control unit 11 has a configuration of a general computer. The CPU 111 is an example of a processor, and each of the ROM 112 and the RAM 113 is an example of a memory in the present disclosure.

The memory unit 12 includes: one or more non-volatile memories (e.g., ROMs) that retain information even when the power of the target device controller 10 is turned off, and one or more volatile memories (RAMs) from which stored information is erased when the power of the target device controller 10 is turned off.

In one embodiment, a ROM of the memory unit 12 stores a startup log file 121, a RAM of the memory unit 12 stores a process log file 122, and another ROM of the memory unit 12 stores a backup log file 123.

The startup log file 121 records startup log data (or operation history) of the target device controller 10, which is output when the target device controller 10 is started, up to a first predetermined size or a second predetermined size greater than the first predetermined size. The first predetermined size is set to, for example, 800 lines (equivalent to approximately 100 kB), and the second predetermined size is set to, for example, 500 kB. The startup log file 121 is stored in, for example, a non-volatile memory (first non-volatile memory in the present disclosure), such as a flash ROM. Each of the first predetermined size and the second predetermined size is set according to the capacity of the non-volatile memory (first non-volatile memory) included in the memory unit 12.

The process log file 122 records process log data (or operation history) of the target device controller 10 up to a third predetermined size. When the third predetermined size is reached, the recorded process log data is overwritten by newly recorded process log data. The process log data recorded in the process log file 122 chronologically follows the startup log data stored in the startup log file 121. In the present embodiment, the third predetermined size is 800 lines (equivalent to approximately 100 kB). Although the first predetermined size and the third predetermined size are both set to 800 lines in the present embodiment, the first predetermined size and the third predetermined size do not have to be equal. The process log file 122 is stored in a volatile memory, such as a RAM. The third predetermined size is set according to the storage capacity of the volatile memory included in the memory unit 12.

The backup log file 123 records a backup copy of process log data obtained from the process log file 122 when the operation of the target device controller 10 is terminated. The backup log file 123 is stored in, for example, a non-volatile memory, such as a flash ROM (a second non-volatile memory in the present disclosure). The storage capacity of the non-volatile memory for storing the backup log file 123 may be greater than or equal to the size of the process log file 122.

Note that the non-volatile memory (first non-volatile memory) for storing the startup log file 121 and the non-volatile memory (second non-volatile memory) for storing the backup log file 123 may be either implemented by the same memory or different memories.

### (Storage Structure of Log Data in Target Device Controller)

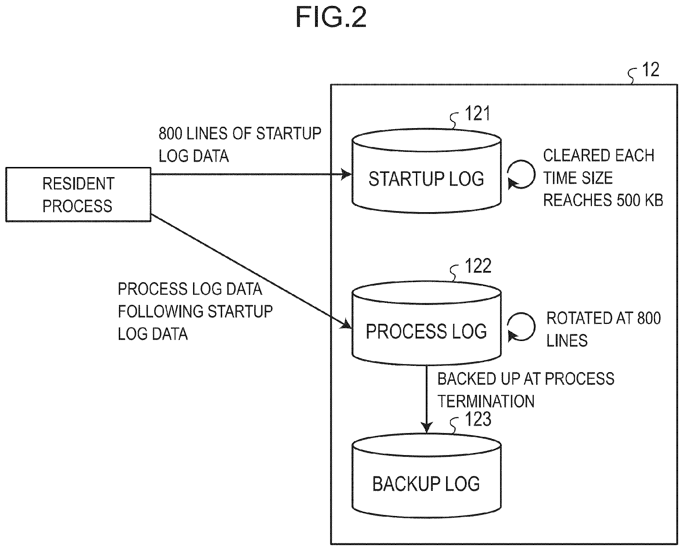

A storage structure of log data in the target device controller 10 will be described with reference to FIG. 2. FIG. 2 is a diagram showing an example of a storage structure of log data stored in the target device controller 10 of the present embodiment.

The CPU 111 of the control unit 11 reads programs stored in the ROM 112, loads the read programs into the RAM 113, and executes the loaded programs. Generally, the target device controller 10 concurrently executes a program called a resident process, which causes the target device to operate, and a program called a script, which manages the operation of the resident process.

When the resident process is started, the target device controller 10 stores the first predetermined size of startup log data (or operation history) in the startup log file 121. The startup log data is stored with a file name of, for example, "startup.log" as the startup log file 121. The first predetermined size is set according to the capacity of a non-volatile memory, such as a flash ROM, that stores the startup log file 121. In the present embodiment, as the first predetermined size, the startup log file 121 records the first 800 lines (equivalent to approximately 100 kB) of startup log data. The capacity of the non-volatile memory, such as a flash ROM, for storing the startup log file 121 may be 500 kB that corresponds to the example of the second predetermined size of the startup log file 121. The capacity of the non-volatile memory may instead be approximately 600 kB, which is greater than 500 kB by approximately 100 kB that corresponds to the size of log data recorded in one startup event. Note that these capacity values are merely examples and are not intended to limit the present disclosure. Thus, the startup log file 121 records startup log data of the target device controller 10 up to approximately 500 kB.

After being started, the target device controller 10 may, for example, fail to set the operating conditions of the target device, be abnormally terminated, and be restarted. The target device controller 10 may be restarted automatically or may be restarted in response to a manual operation. When the target device controller 10 is restarted, restart log data indicating the restart is recorded in the startup log file 121. Each time a restart occurs, restart log data indicating the occurrence of the restart and having a size of up to about 100 kB is recorded in the startup log file 121. As described above, the target device controller 10 of the present embodiment includes a non-volatile memory that can store the startup log file 121 with a size of up to 500 kB, which corresponds to the second predetermined size. That is, the target device controller 10 can store log data indicating the occurrence of up to five consecutive restarts in the startup log file 121. When the sixth restart occurs and the latest restart log data is to be recorded, the upper limit (500 kB) of the startup log file 121 will be exceeded. In such a case, the target device controller 10 deletes (clears) the current "startup.log" file and newly generates a "startup.log" file.

When not restarted, the target device controller 10 stores the process log data of the resident process in the startup log file 121 up to 800 lines, which corresponds to the first predetermined size. In this case, information necessary for debugging, such as environmental information, configuration information, process information, and/or thread information output by the resident process, is recorded in the startup log file 121.

The target device controller 10 stores, in the process log file 122, up to the third predetermined size of process log data that chronologically follows the startup log data or the restart log data stored in the startup log file 121. The process log data is stored with a file name of, for example, "process.log" as the process log file 122. In the present embodiment, the third predetermined size is set to, for example, 800 lines (which is equal to the first predetermined size). Here, for example, log data up to a line feed code corresponds to one line. Note that this value is only an example and is not intended to limit the present disclosure. The process log file 122 is stored in a volatile memory, such as a RAM. The target device controller 10 cyclically stores 800 lines of process log data in an overwriting manner until the resident process is terminated abnormally or normally. Also, when process log data exceeding 800 lines is newly obtained, the target device controller 10 may, for example, delete the oldest line of the process log data and store one line of newly-obtained process log data. In other words, when the size of the process log data stored in the process log file 122 reaches the third predetermined size, an oldest log entry in the process log data may be overwritten with a latest log entry.

When the target device controller 10 terminates abnormally or normally, the target device controller 10 moves the current process log data in the process log file 122 to the backup log file 123. The moved process log data is stored in a non-volatile memory, such as a flash ROM, with a file name such as "backup.log" as the backup log file 123.

When the target device controller 10 ends its operation, the user or the administrator can determine, for example, the cause of the restart or the cause of the abnormal termination of the resident process by referring to the content of the startup log file 121 and the backup log file 123.

### (Functional Configuration of Target Device Controller)

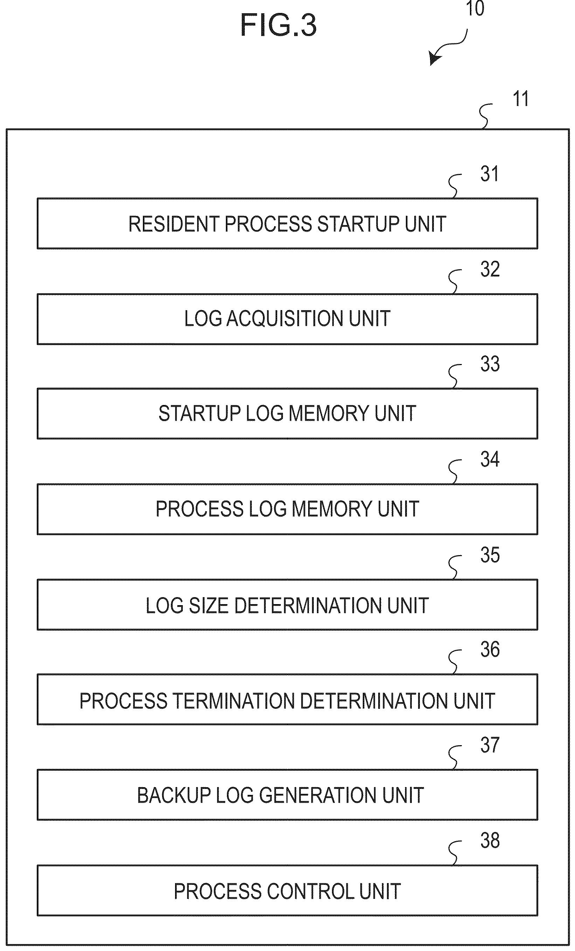

A functional configuration of the target device controller 10 will be described with reference to FIG. 3. FIG. 3 is a functional block diagram showing an example of a functional configuration of the target device controller 10 of the present embodiment.

The control unit 11 (or the processor) of the target device controller 10 loads programs into the RAM 113 and executes the loaded programs to implement functional units including a resident process startup unit 31, a log acquisition unit 32, a startup log memory unit 33, a process log memory unit 34, a log size determination unit 35, a process termination determination unit 36, a backup log generation unit 37, and a process control unit 38 shown in FIG. 3. Note that some or all of these functional units may be implemented by dedicated hardware.

The resident process startup unit 31 starts the resident process.

The log acquisition unit 32 obtains log data generated by the resident process.

When the resident process is started, the startup log memory unit 33 stores, in the first non-volatile memory, startup log data of the target device controller10 as the startup log file 121, up to the first predetermined size. Also, when restarts occur and the size of the startup log file 121 reaches the second predetermined size, which is greater than the first predetermined size, the startup log memory unit 33 deletes (or clears) the startup log file 121 stored in the first non-volatile memory to restart the storage of log data. The startup log memory unit 33 is an example of a first memory unit in the present disclosure.

The process log memory unit 34 cyclically stores process log data, as the process log file 122, in a volatile memory up to the third predetermined size in an overwriting manner. The process log data chronologically follows the startup log data or the restart log data stored in the startup log memory unit 33. When the size of the process log data stored in the process log file 122 reaches the third predetermined size, the process log memory unit 34 overwrites the oldest log entry in the process log data with the latest log entry. In other words, the process log memory unit 34 cyclically stores process log data of the resident process in the process log file 122 in an overwriting manner by using a predetermined area of a volatile memory. The process log memory unit 34 is an example of a second memory unit in the present disclosure.

The log size determination unit 35 determines whether the size of startup log data and/or restart log data stored in the startup log file 121 has reached the upper limit (first predetermined size or second predetermined size) of the startup log file 121. Also, the log size determination unit 35 determines whether the size of the process log data stored in the process log file 122 has reached the upper limit (third predetermined size) of the process log file 122.

The process termination determination unit 36 determines whether the resident process has terminated either abnormally or normally.

When the operation of the target device controller 10 ends, in other words, when the target device controller 10 is terminated, the backup log generation unit 37 moves the process log file 122 to the second non-volatile memory. The backup log generation unit 37 is an example of a third memory unit in the present disclosure.

The process control unit 38 performs process control, such as restarting and shutting down the target device controller 10.

### (Process Performed by Target Device Controller)

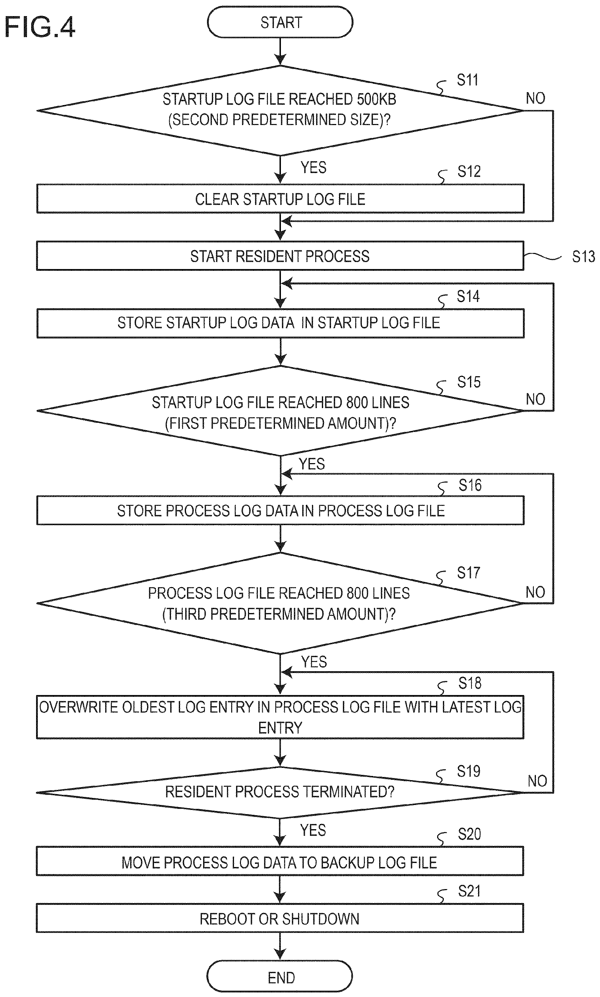

A process performed by the target device controller10 will be described with reference to FIG. 4. FIG. 4 is a flowchart illustrating an example of a process performed by the target device controller 10 according to the present embodiment. The processor (CPU 11) of the target device controller 10 may be configured to execute a program stored in a memory (the ROM 112 or the RAM 113) to perform the steps in the process described below.

The log size determination unit 35 determines whether the total size of startup log data and restart log data accumulated and stored in the startup log file 121 in past startup and restart events has reached 500 kB (second predetermined size) (step S11). When it is determined that the total size of startup log data and restart log data stored in the startup log file 121 has reached 500 kB (second predetermined size) (step S11: Yes), the process proceeds to step S12. On the other hand, when it is determined that the total size of startup log data and restart log data stored in the startup log file 121 has not reached 500 kB (second predetermined size) (step S11: No), the process proceeds to step S13.

When it is determined at step S11 that the total size of startup log data and restart log data stored in the startup log file 121 has reached 500 kB (second predetermined size), the startup log memory unit 33 clears the startup log file 121 (step S12).

The resident process startup unit 31 starts the resident process (step S13).

The startup log memory unit 33 stores startup log data in the startup log file 121 (step S14).

The log size determination unit 35 determines whether the size of the startup log data accumulated and stored in the startup log file 121 in the current startup event has reached 800 lines (first predetermined size) (step S15). When it is determined that the size of the startup log data stored in the startup log file 121 has reached 800 lines (first predetermined size) (step S15: Yes), the process proceeds to step S16. On the other hand, when it is not determined that the size of the startup log data stored in the startup log file 121 has reached 800 lines (first predetermined size) (step S15: No), the process returns to step S14.

When it is determined at step S15 that the size of the startup log data stored in the startup log file 121 has reached 800 lines (first predetermined size), the process log memory unit 34 starts to store process log data of the resident process in the process log file 122 (step S16).

The log size determination unit 35 determines whether the size of the process log data stored in the process log file 122 has reached 800 lines (third predetermined size) (step S17). When it is determined that the size of the process log data stored in the process log file 122 has reached 800 lines (third predetermined size) (step S17: Yes), the process proceeds to step S18. On the other hand, when it is determined that the size of the process log data stored in the process log file 122 has not reached 800 lines (third predetermined size) (step S17: No), the process returns to step S16.

When it is determined at step S17 that the size of the process log data stored in the process log file 122 has reached 800 lines (third predetermined size), the process log memory unit 34 overwrites the oldest log entry in the process log data with the latest log entry of the resident process (step S18). In other words, the process log memory unit 34 cyclically stores 800 lines (third predetermined size) of process log data in an overwriting manner in the process log file 122.

The process termination determination unit 36 determines whether the resident process has terminated (step S19). The process termination determination unit 36 determines whether the resident process has terminated regardless of whether the resident process has terminated normally or abnormally. When it is determined that the resident process has terminated (step S19: Yes), the process proceeds to step S20. On the other hand, when it is not determined that the resident process has terminated (step S19: No), the process returns to step S18.

When it is determined at step S19 that the resident process has terminated, the backup log generation unit 37 moves the process log data in the process log file 122 to the backup log file 123 (step S20).

The process control unit 38 reboots or shuts down the target device controller 10 (step S21). Then, the target device controller 10 ends its operation.

### (Effects of Embodiment)

As described above, the target device controller 10 (information processing device) of the present embodiment includes the startup log memory unit 33 (first memory unit) that when the target device controller 10 is started, stores up to 800 lines (first predetermined size) of startup log data of the target device controller 10 as the startup log file 121 in the first non-volatile memory and when the target device controller 10 is restarted, stores up to 500 kB (second predetermined size), which is greater than 800 lines (first predetermined size), of restart log data of the target device controller 10 as the startup log file 121 in the first non-volatile memory; the process log memory unit 34 (second memory unit) that cyclically stores up to 800 lines (third predetermined size) of process log data in an overwriting manner as the process log file 122 in a volatile memory, the process log data chronologically following the startup log data or the restart log data; and the backup log generation unit 37 (third memory unit) that, when the operation of the target device controller 10 ends, moves the process log data stored by the process log memory unit 34 to the backup log file 123 in the second non-volatile memory. This configuration makes it possible to reliably store information necessary for determining the cause of abnormal termination of an information processing device even with a limited storage area. This configuration also makes it possible to reduce the number of times log data is written into the second non-volatile memory and thereby makes it possible to extend the lifespan of the second non-volatile memory.

Also, in the target device controller 10 (information processing device) of the present embodiment, when the total size of the startup log data and the restart log data reaches 500 kB (second predetermined size), the startup log memory unit 33 (first memory unit) deletes (or clears) the content of the startup log file 121 stored in the first non-volatile memory to restart the storage of log data. With this configuration, even when the target device controller 10 is rebooted at startup, log data related to the reboot can be stored.

Furthermore, in the target device controller 10 (information processing device) of the present embodiment, when the size of the process log file 122, which is stored by the process log memory unit 34 (second memory unit) and contains the process log data, exceeds 800 lines (third predetermined size), the process log memory unit 34 (second memory unit) overwrites the oldest log entry in the process log data in the process log file 122 with the latest log entry. Therefore, even with a limited storage area, this configuration make it possible to reliably store log data including events related to abnormal termination of a process.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims and their equivalents are intended to cover such forms or modifications as would fall within the scope of the disclosure.

## Claims

1. An information processing device comprising:
a first non-volatile memory;
a second non-volatile memory;
a volatile memory; and
a controller that stores a program and includes a processor configured to execute the program to perform the steps of:
when the information processing device is started, storing, in the first non-volatile memory, startup log data of the information processing device up to a first predetermined size,
when the information processing device is restarted, storing, in the first non-volatile memory, restart log data of the information processing device up to a second predetermined size greater than the first predetermined size,
cyclically storing process log data of the information processing device in the volatile memory up to a third predetermined size in an overwriting manner, the process log data chronologically following the startup log data or the restart log data, and
when the information processing device is terminated, moving and storing the process log data to/in the second non-volatile memory.

2. The information processing device according to claim 1, wherein the steps further include:
determining whether a total size of the startup log data and the restart log data in the first non-volatile memory has reached the second predetermined size, and
when the total size of the startup log data and the restart log data has reached the second predetermined size, clearing the startup log data and the restart log data in the first non-volatile memory to restart storage of log data.

3. The information processing device according to claim 1 or 2, wherein the steps further include:
determining whether a size of the process log data has reached the third predetermined size, and
when the size of the process log data has reached the third predetermined size, overwriting an oldest log entry in the process log data with a latest log entry.

4. The information processing device according to any one of claims 1 to 3, wherein the startup log data includes at least one of environmental information, configuration information, process information, and thread information output by a resident process executed by the information processing device.

5. The information processing device according to any one of claims 1 to 4, wherein the steps further include
determining whether a size of the startup log data has reached the first predetermined size, and
when the size of the startup log data has reached the first predetermined size, starting to store the process log data.

6. The information processing device according to any one of claims 1 to 5, wherein
the steps further include starting a resident process,
the process log data is log data of the resident process, and
the process log data is cyclically stored in the overwriting manner until the resident process is terminated.

7. The information processing device according to claim 6, wherein the process log data is moved to the second non-volatile memory when the resident process is terminated.

8. The information processing device according to any one of claims 1 to 7, wherein the first predetermined size and the third predetermined size are equal to each other.

9. The information processing device according to any one of claims 1 to 8, wherein
each of the first predetermined size and the second predetermined size is determined according to a capacity of the first non-volatile memory, and
the third predetermined size is determined according to a capacity of the volatile memory.

10. The information processing device according to any one of claims 1 to 9, wherein the first non-volatile memory and the second non-volatile memory are implemented by a same type of memory.

11. A method performed by an information processing device, the method comprising:
when the information processing device is started, storing, in a first non-volatile memory, startup log data of the information processing device up to a first predetermined size;
when the information processing device is restarted, storing, in the first non-volatile memory, restart log data of the information processing device up to a second predetermined size greater than the first predetermined size;
cyclically storing process log data of the information processing device in a volatile memory up to a third predetermined size in an overwriting manner, the process log data chronologically following the startup log data or the restart log data; and
when the information processing device is terminated, moving and storing the process log data to/in a second non-volatile memory.

12. The method according to claim 11, further comprising:
determining whether a total size of the startup log data and the restart log data in the first non-volatile memory has reached the second predetermined size; and
when the total size of the startup log data and the restart log data has reached the second predetermined size, clearing the startup log data and the restart log data in the first non-volatile memory to restart storage of log data.

13. The method according to claim 11 or 12, further comprising:
determining whether a size of the process log data has reached the third predetermined size; and
when the size of the process log data has reached the third predetermined size, overwriting an oldest log entry in the process log data with a latest log entry.

14. The method according to any one of claims 11 to 13, wherein the startup log data includes at least one of environmental information, configuration information, process information, and thread information output by a resident process executed by the information processing device.

15. A non-transitory computer readable storage medium storing a program for causing a processor of an information processing device to perform a method according to any one of claims 11 to 14.
